# EUROPEAN PATENT APPLICATION

(11) **EP 4 250 433 A1**
(43) Date of publication of application: **27.09.2023**
(21) Application number: 23162768.8
(22) Date of filing: 20.03.2023
(51) Int. Cl.: H01M 10/42, H01M 10/0525, C01B 39/00, C08K 3/016, C09K 21/00

(54) **CORE-SHELL PARTICLES AND SECONDARY BATTERY, MODULE AND DEVICE INCLUDING THE SAME**

(30) Priority: 24.03.2022 KR 20220036935
(71) Applicant: SK On Co., Ltd., Seoul 03161 (KR)
(72) Inventor: MOON, Joon Hyung, 34124 Daejeon (KR); PARK, Gwi Ok, 34124 Daejeon (KR); CHUNG, Ju Ho, 34124 Daejeon (KR)
(74) Representative: Prüfer & Partner mbB Patentanwälte · Rechtsanwälte

(57) **Abstract**

The present disclosure provides a core-shell particle including a core including a porous substrate and a flame retardant, and a shell including a thermoplastic polymer and covering the core, and a secondary battery, a module, and a device including the same.

## Description

### BACKGROUND

### 1. Technical Field

The present disclosure relates to a core-shell particle and a secondary battery, module, and device including the same.

### 2. Related Art

With the development of the electric vehicle market, there is a demand for manufacturing batteries capable of traveling long distances on a single charge. In order to increase the driving range of electric vehicles, the energy density of the battery must be high. Lithium secondary batteries exhibit high energy density and are most suitably used as batteries for electric vehicles.

The lithium secondary battery includes an anode, a cathode, and a separator interposed therebetween. However, since the lithium secondary battery uses a flammable solvent as the electrolyte, stability may be reduced when exposed to a high temperature environment by mechanical shock or thermal shock.

In particular, in a conventional lithium secondary battery, when a flammable solvent such as dimethyl carbonate (DMC), diethyl carbonate (DEC), ethyl methyl carbonate (EMC), ethyl carbonate (EC) exceeds a certain temperature, side reactions may occur with the electrodes, and due to these side reactions, the internal temperature of the cell of the lithium secondary battery rapidly rises, causing ignition or explosion of the lithium secondary battery.

### SUMMARY

Embodiments provide a core-shell particle that suppresses the side reaction of the electrolyte when the secondary battery is exposed to a high temperature environment and improves thermal stability without reducing the capacity retention rate of the secondary battery, and a secondary battery, module, and device including the same.

In accordance with an aspect of the present disclosure, there is provided a core-shell particle including a core including a porous substrate and a flame retardant, and a shell including a thermoplastic polymer and covering the core.

According to an embodiment, the porous substrate may include one or more selected from a group consisting of zeolite, alumino phosphate, alumino silicate, titano silicate, calcium phosphate, zirconium phosphate and silica gel.

According to an embodiment, the porous substrate may include zeolite.

According to an embodiment, the flame retardant may include one or more selected from a group consisting of phosphorus-based flame retardants, nitrogen-based flame retardants, phosphorus-nitrogen-based flame retardants, halogen-based flame retardants, and antimony-based flame retardants.

According to an embodiment, the flame retardant may include an aromatic phosphate compound.

According to an embodiment, the thermoplastic polymer may include one or more selected from a group consisting of polyolefin-based resins, polyalcohol-based resins, polyimide-based resins, polyester-based resins, and cellulose-based resins.

According to an embodiment, the thermoplastic polymer may include carboxymethylcellulose.

According to an embodiment, the core-shell particle may include 93 wt% to 99 wt% of the core and 1 wt% to 7 wt% of the shell based on a total weight of the core-shell particle.

In accordance with another aspect of the present disclosure, there is provided a secondary battery including the core-shell particles of the present disclosure, an electrode assembly, an electrolyte, and a case configured to accommodate the core-shell particle, the electrode assembly, and the electrolyte.

According to an embodiment, the secondary battery may include 2 wt% to 18 wt% of the core-shell particles based on a total weight of the electrolyte.

According to an embodiment, the electrode assembly may include a cathode, an anode, and a separator interposed between the cathode and the anode.

In accordance with another aspect of the present disclosure, there is provided a module including the secondary battery of the present disclosure as a unit cell.

In accordance with another aspect of the present disclosure, there is provided a device including the module of the present disclosure as a power source.

According to a core-shell particle of the present disclosure, the shell is decomposed when the secondary battery is exposed to a high-temperature environment, and the porous substrate included in the core adsorbs the electrolyte, thereby suppressing side reactions between the electrode and the electrolyte.

In addition, the core-shell particle according to the present disclosure has an effect of improving thermal stability by releasing a flame retardant included in the core into the electrolyte when the secondary battery is exposed to a high temperature environment.

In addition, the core-shell particle according to the present disclosure has an effect of not reducing the capacity retention rate of the secondary battery because the shell does not decompose when the secondary battery is not exposed to a high temperature environment and the porous substrate coated by the shell does not adsorb the electrolyte.

In addition, the core-shell particle according to the present disclosure has an effect of not reducing the capacity retention rate by preventing an increase in the resistance of the secondary battery because the shell does not decompose when the battery is not exposed to a high temperature environment and the flame retardant coated by the shell is not released into the electrolyte.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.

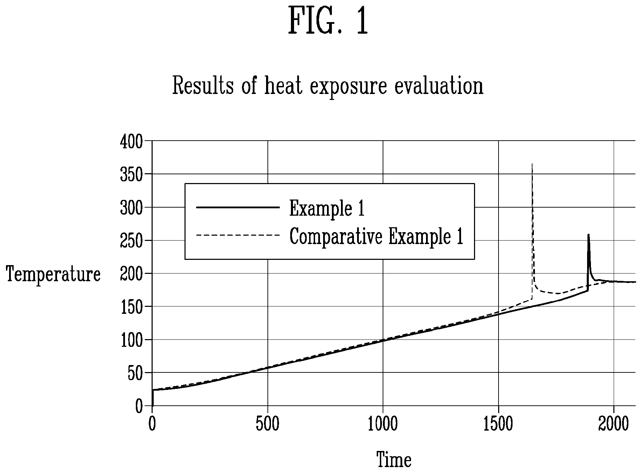

FIG. 1 is a graph illustrating thermal stability test results of Example 1 and Comparative Example 1.

### DETAILED DESCRIPTION

The specific structural or functional description disclosed herein is merely illustrative for the purpose of describing embodiments according to the concept of the present disclosure. The embodiments according to the concept of the present disclosure can be implemented in various forms, and cannot be construed as limited to the embodiments set forth herein.

Hereinafter, a core-shell particle according to the present disclosure, and a secondary battery, a module, and a device including the same will be described.

In general, when a secondary battery is exposed to a high temperature environment by mechanical shock or thermal shock, the decomposition of the anode SEI (Solid Electrolyte Interface) film begins and the heat of reaction is generated. Due to the heat of reaction generated, the internal temperature of the secondary battery rises, and the decomposition of the electrolyte proceeds in this process. At the same time, the cathode and anode come into contact, resulting in an internal short circuit and generating more heat of reaction. In addition, the chain reaction of the heat of reaction may cause the problem of ignition or explosion of the secondary battery. As such, the electrolyte occupies a very large proportion in terms of stability and performance of the secondary battery.

In order to improve the stability and performance of the secondary battery as described above, the core-shell particle according to the present disclosure includes a core including a porous substrate and a flame retardant, and a shell including a thermoplastic polymer and covering the core.

According to an embodiment, the core includes a porous substrate. The porous substrate may adsorb the electrolyte by pores present on the porous substrate when the secondary battery is exposed to a high temperature environment. This process has an effect of preventing an additional side reaction between the electrode and the electrolyte from occurring. In addition, the porous substrate may release a flame retardant included in the pores of the porous substrate onto the electrolyte when the secondary battery is exposed to a high temperature environment. By this process, the flame retardant captures active radicals that act as a driving force for ignition, and blocks oxygen, thereby having an effect of suppressing ignition or explosion of the secondary battery.

The porous substrate may include one or more selected from a group consisting of zeolite, alumino phosphate, alumino silicate, titano silicate, calcium phosphate, zirconium phosphate and silica gel, and preferably include zeolite. When the porous substrate is used, the amount of electrolyte adsorption may be improved. The pore size of the porous substrate may range from 1 nm to 100 nm, 1 nm to 70 nm, or 1 nm to 50 nm, but is not limited thereto.

The flame retardant may include at least one selected from the group consisting of a phosphorus-based flame retardant, a nitrogen-based flame retardant, a phosphorus-nitrogen-based flame retardant, a halogen-based flame retardant, and an antimony-based flame retardant, and preferably may include an aromatic phosphate compound.

For example, for the phosphorus-based flame retardant, phosphate compounds, phosphonate compounds, phosphinate compounds, phosphineoxide compounds, phosphazene compounds or metal salts thereof may be used. For the nitrogen-based flame retardant and a phosphorus-nitrogen-based flame retardant, piperazine pyrophosphate, melamine polyphosphate, ammonium polyphosphate, melamine cyanurate, or a combination thereof may be used. For the halogen-based flame retardant, decabromodiphenyl oxide, decabromodiphenylethane, decabromodiphenyl ether, tetrabromobisphenol A, tetrabromobisphenol A-epoxy oligomer, brominated epoxy oligomer, octabromotrimethylphenylindane, ethylenebistetrabromophthalimide, 2,4,6-tris(2,4,6-tribromophenoxy)-1,3,5-triazine, or a combination thereof may be used. For the antimony-based flame retardant, antimony oxide, antimony pentoxide, or a combination thereof may be used. When the flame retardant is used, there is an effect that the thermal stability of the secondary battery can be improved.

According to an embodiment, the shell includes a thermoplastic polymer and covers the core. When a porous substrate not covered by the shell is introduced into the electrolyte, the electrolyte may be adsorbed by pores present on the porous substrate even if the secondary battery is not exposed to a high temperature environment. As a result, the electrolyte capacity may be reduced, resulting in a problem in which the capacity retention rate of the secondary battery is reduced. In addition, when a flame retardant not covered by the shell is introduced into the electrolyte, the resistance of the secondary battery may increase, resulting in a problem of reducing the capacity retention rate.

In the core-shell particle according to the present disclosure, since the core including a porous substrate and a flame retardant is covered with the shell including a thermoplastic polymer, it is possible to prevent the capacity retention rate of the secondary battery from reducing due to the porous substrate and the flame retardant in a situation where the secondary battery is not exposed to a high temperature environment. On the other hand, when the secondary battery is exposed to a high temperature environment, since the thermoplastic polymer included in the shell is plasticized at a specific temperature or higher and the shell disappears, the porous substrate and the flame retardant included in the shell are released into the electrolyte, thereby having an effect of suppressing ignition or explosion of the secondary battery.

The thermoplastic polymer may include at least one selected from the group consisting of polyolefin-based resins, polyalcohol-based resins, polyimide-based resins, polyester-based resins, and cellulose-based resins, and preferably may include carboxymethylcellulose.

According to an embodiment, based on a total weight of the core-shell particle, the core-shell particle may include 93 wt% to 99 wt% of the core and 1 wt% to 7 wt% of the shell. Here, the content of the shell may mean the content of the shell coated on the core surface. Within the above range, there is an effect of improving thermal stability without reducing the capacity retention rate of the secondary battery.

The secondary battery according to the present disclosure includes the core-shell particle, an electrode assembly, an electrolyte and a case configured to accommodate the core-shell particle, the electrode assembly, and the electrolyte.

The electrolyte may be a non-aqueous electrolyte. The electrolyte may include a lithium salt and an organic solvent. For example, the organic solvent may include at least one selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

According to an embodiment, the secondary battery may include 2 wt% to 18 wt% of the core-shell particles based on a total weight of the electrolyte. Within the above range, there is an effect of improving thermal stability without reducing the capacity retention rate of the secondary battery.

According to an embodiment, the electrode assembly may include a cathode, an anode and a separator interposed between the cathode and the anode.

The cathode and the anode may include a current collector and an active material layer disposed on the current collector. For example, the cathode may include a cathode current collector and a cathode active material layer, and the anode may include an anode current collector and an anode active material layer.

The current collector may include a known conductive material in the range of not causing a chemical reaction in the lithium secondary battery. For example, the current collector may include any one of stainless steel, Ni, Al, Ti, Cu, and alloys thereof, and may be provided in various forms such as film, sheet, foil, and the like.

The active material layer includes an active material. For example, the cathode active material layer may include a cathode active material, and the anode active material layer may include an anode active material.

The cathode active material may be a material into which Li ions may be stored and extracted. The cathode active material may be lithium metal oxide. For example, the cathode active material may be one of lithium manganese oxides, lithium nickel oxides, lithium cobalt oxides, lithium nickel manganese oxides, lithium nickel cobalt manganese oxides, lithium nickel cobalt aluminum oxides, lithium iron phosphate compounds, lithium phosphate manganese compounds, lithium phosphate cobalt compounds, and lithium phosphate vanadium compounds, but is not limited thereto.

The anode active material may be a material in which Li ions may be stored and extracted. For example, the anode active material may be any one of crystalline carbon, amorphous carbon, carbon composite, carbon fiber or other carbon-based material, lithium alloy, Si, and Sn. According to an embodiment, the anode active material may be natural graphite or artificial graphite, but is not limited thereto.

The cathode and the anode may further include a binder and a conductive material, respectively.

The binder may mediate the bond between the current collector and the active material layer, thereby improving mechanical stability. For example, the binder may be an organic binder or a water-based binder. For example, the organic binder may be any one of vinylidene fluoride-hexafluoropropylene copolymer (PVDF-co-HFP), polyvinylidene fluoride (PVDF), polyacrylonitrile, and polymethylmethancrylate, and the water-based binder may be styrene-butadiene rubber (SBR), but is not limited thereto.

The conductive material may improve the electrical conductivity of the lithium secondary battery. The conductive material may include a metalbased material. The conductive material may include a conventional carbon based conductive material. For example, the conductive material may include any one of graphite, carbon black, graphene, and carbon nanotubes, and preferably may include carbon nanotubes.

The separator is interposed between the cathode and the anode. The separator is configured to prevent an electrical short circuit between the cathode and the anode and to generate a flow of ions.

For example, the separator may include a porous polymer film or a porous nonwoven fabric. The porous polymer film may be composed of a single layer or multiple layers, including polyolefin-based polymers such as ethylene polymers, propylene polymers, ethylene/butene copolymers, ethylene/hexene copolymers, and ethylene/methacrylate copolymers. The porous nonwoven fabric may include glass fibers with a high melting point, polyethylene terephthalate fibers. However, it is not limited thereto, and according to an embodiment, it may be a ceramic coated separator (CCS) including ceramic.

A plurality of electrode assemblies may be provided and sequentially stacked in the case. For example, a plurality of electrode assemblies may be provided and may be wound, laminated, folded, or zigzag stacked.

The module of the present disclosure includes the secondary battery as a unit cell. In addition, the device of the present disclosure includes the module as a power source.

When the core-shell particle according to the present disclosure and the secondary battery including the same are exposed to a high temperature environment, side reactions between the electrode and the electrolyte may be suppressed, and thus the thermal stability of the secondary battery may be improved. In addition, when the core-shell particle according to the present disclosure and the secondary battery including the same are not exposed to a high temperature environment, the shell is not decomposed so that the porous substrate included in the core does not adsorb the electrolyte, and since the flame retardant is not discharged into the electrolyte, there is an effect that the capacity retention rate of the secondary battery is not reduced. Accordingly, output characteristics, capacity, and stability of a module including the secondary battery as a unit cell and a device including the module as a power source may be improved.

Hereinafter, the present disclosure will be described in more detail based on Examples and Comparative Examples. However, the following Examples and Comparative Examples are only examples for explaining the present disclosure in more detail, and the present disclosure is not limited by the following Examples and Comparative Examples.

### Examples

### <Preparation Example> - Porous particle preparation

### Preparation Example 1

A suspension was prepared by mixing 90 wt% of zeolite as a porous substrate and 10 wt% of triphenyl phosphate as a flame retardant with ethanol. After filtering the suspension, the filtered particles were vacuum-dried to prepare porous particles in which triphenyl phosphate was deposited in the pores of the zeolite. Thereafter, 99 wt% of the porous particles and 1 wt% of carboxymethylcellulose, which is a thermoplastic polymer, were mixed to prepare core-shell particles coated with carboxymethylcellulose on the surface of the porous particles.

### Preparation Example 2

Core-shell particles were prepared by the same process as in Preparation Example 1, except that 96 wt% of the porous particles and 4 wt% of carboxymethylcellulose which is a thermoplastic polymer, were mixed instead of 99 wt% of the porous particles and 1 wt% of carboxymethylcellulose which a thermoplastic polymer, in Preparation Example 1.

### Preparation Example 3

Core-shell particles were prepared by the same process as in Preparation Example 1, except that 93 wt% of the porous particles and 7 wt% of carboxymethylcellulose which is a thermoplastic polymer, were mixed instead of 99 wt% of the porous particles and 1 wt% of carboxymethylcellulose which a thermoplastic polymer, in Preparation Example 1.

### Preparation Example 4

A suspension was prepared by mixing 90 wt% of zeolite as a porous substrate and 10 wt% of triphenyl phosphate as a flame retardant with ethanol. After filtering the suspension, the filtered particles were vacuum-dried to prepare porous particles in which triphenyl phosphate was deposited in the pores of the zeolite.

### Preparation Example 5

Core-shell particles were prepared by the same process as in Preparation Example 1, except that 99.5 wt% of the porous particles and 0.5 wt% of carboxymethylcellulose which is a thermoplastic polymer, were mixed instead of 99 wt% of the porous particles and 1 wt% of carboxymethylcellulose which a thermoplastic polymer, in Preparation Example 1.

### Preparation Example 6

Core-shell particles were prepared by the same process as in Preparation Example 1, except that 90 wt% of the porous particles and 10 wt% of carboxymethylcellulose which is a thermoplastic polymer, were mixed instead of 99 wt% of the porous particles and 1 wt% of carboxymethylcellulose which a thermoplastic polymer, in Preparation Example 1.

### Preparation Example 7

A suspension was prepared by mixing zeolite as a porous substrate with ethanol. After filtering the suspension, the filtered particles were vacuum-dried to prepare porous particles. Thereafter, 99 wt% of the porous particles and 1 wt% of carboxymethylcellulose, which is a thermoplastic polymer, were mixed to prepare core-shell particles coated with carboxymethylcellulose on the surface of the porous particles.

### <Example> - Secondary battery preparation

### Example 1

### Anode preparation

An anode slurry was prepared by mixing 24 wt% of natural graphite, 70 wt% of artificial graphite, 1wt% of carboxymethylcellulose, 4 wt% of styrene butadiene rubber and 1 wt% of carbon nanotubes in distilled water. The anode slurry was applied onto a copper current collector having a thickness of 8 µm and then dried. An anode having an anode active material layer formed thereon was prepared by rolling the dried anode slurry.

### Cathode preparation

A cathode slurry was prepared by mixing 97 wt% of NCM811(Li[Ni0.8Co0.1Mn0.1]O2), 1 wt% of carbon nanotubes and 2wt% of polyvinylidene fluoride in methylpyrrolidone (N-Methyl-2-pyrrolidone). The cathode slurry was applied onto a aluminum current collector having a thickness of 12 µm and then dried. A cathode having an= cathode active material layer formed thereon was prepared by rolling the dried cathode slurry.

### Secondary battery preparation

An electrode assembly was prepared by interposing a polyethylene separator having a thickness of 13 µm between the prepared anode and cathode. The electrode assembly was placed in a pouch, and 5 wt% of the core-shell particles prepared in Preparation Example 1 based on the total weight of the electrolyte was put into the pouch. Thereafter, an electrolyte in which 1M LiPF6 was dissolved in a solvent in which 25 vol% of ethylenecarbonate and 75 vol% of diethylcarbonate were mixed was injected, and then the pouch was sealed. Thereafter, the sealed pouch was subjected to a post-treatment process (conversion and degassing process) to manufacture a secondary battery.

### Example 2

A secondary battery was prepared by the same process as in Example 1, except for putting the core-shell particles of Preparation Example 2 into the pouch instead of putting the core-shell particles of Preparation Example 1 into the pouch in Example 1.

### Example 3

A secondary battery was prepared by the same process as in Example 1, except for putting the core-shell particles of Preparation Example 3 into the pouch instead of putting the core-shell particles of Preparation Example 1 into the pouch in Example 1.

### Example 4

A secondary battery was prepared by the same process as in Example 1, except for putting 10 wt% of the core-shell particles of Preparation Example 1 in the pouch based on the total weight of the electrolyte instead of putting 5 wt% of the core-shell particles of Preparation Example 1 based on the total weight of the electrolyte into the pouch in Example 1.

### Example 5

A secondary battery was prepared by the same process as in Example 1, except for putting the core-shell particles of Preparation Example 5 into the pouch instead of putting the core-shell particles of Preparation Example 1 into the pouch in Example 1.

### Example 6

A secondary battery was prepared by the same process as in Example 1, except for putting the core-shell particles of Preparation Example 6 into the pouch instead of putting the core-shell particles of Preparation Example 1 into the pouch in Example 1.

### Example 7

A secondary battery was prepared by the same process as in Example 1, except for putting 1 wt% of the core-shell particles of Preparation Example 1 in the pouch based on the total weight of the electrolyte instead of putting 5 wt% of the core-shell particles of Preparation Example 1 based on the total weight of the electrolyte into the pouch in Example 1.

### Example 8

A secondary battery was prepared by the same process as in Example 1, except for putting 20 wt% of the core-shell particles of Preparation Example 1 in the pouch based on the total weight of the electrolyte instead of putting 5 wt% of the core-shell particles of Preparation Example 1 based on the total weight of the electrolyte into the pouch in Example 1.

### Comparative Example 1

A secondary battery was prepared by the same process as in Example 1, except for not putting the core-shell particles of Preparation Example 1 into the pouch in Example 1.

### Comparative Example 2

A secondary battery was prepared by the same process as in Example 1, except for putting the core-shell particles of Preparation Example 7 into the pouch instead of putting the core-shell particles of Preparation Example 1 into the pouch in Example 1.

### Comparative Example 3

A secondary battery was prepared by the same process as in Comparative Example 2, except that an electrolyte in which 1M LiPF6 is dissolved in a solvent in which 25 vol% of ethylene carbonate and 75 vol% of diethyl carbonate are mixed and containing 10 wt% of triphenyl phosphate, a flame retardant, based on the total weight of the electrolyte was used, instead of an electrolyte in which 1M LiPF6 is dissolved in a solvent in which 25 vol% of ethylenecarbonate and 75 vol% of diethylcarbonate were mixed in Comparative Example 2.

### Comparative Example 4

A secondary battery was prepared by the same process as in Example 1, except for putting the porous particles of Preparation Example 4 into the pouch instead of putting the core-shell particles of Preparation Example 1 into the pouch in Example 1.

### <Experimental Example>

### Experimental Example 1 - Thermal stability evaluation

After putting the secondary batteries prepared in Examples 1 to 8 and Comparative Examples 1 to 4 into each chamber, the on-set temperature at which heat generation of the secondary battery occurs and the maximum temperature of the chamber when the secondary battery explodes while the temperature is raised at 5 °C/min under a nitrogen atmosphere are measured and are shown in Table 1 below. In addition, FIG. 1 shows a time-temperature graph in which the secondary batteries prepared in Example 1 and Comparative Example 1 change under the experimental conditions.

### Experimental Example 2 - Capacity retention rate measurement

The capacity retention rates of the secondary batteries prepared in Examples 1 to 8 and Comparative Examples 1 to 4 were measured at 200 cycles while being charged and discharged in the range of 2.5V to 4.2V under 0.3C/0.3C conditions at 45°C, and are shown in Table 1 below.

**TABLE 1**

| | Porous substrate type | Flame retardant type | Thermoplastic polymer type | Shell coating amount^{1 )} (wt%) | Particle addition amount ²⁾ (wt%) | Capacity retention rate (%) | On-set temperature (°C) | Maximum temperature at explosion (°C) |
|---|---|---|---|---|---|---|---|---|
| Example 1 | Zeolite | TPP³⁾ | CMC⁴⁾ | 1 | 5 | 81 | 174 | 256 |
| Example 2 | Zeolite | TPP | CMC | 4 | 5 | 81 | 173 | 255 |
| Example 3 | Zeolite | TPP | CMC | 7 | 5 | 80 | 174 | 256 |
| Example 4 | Zeolite | TPP | CMC | 1 | 10 | 80 | 173 | 250 |
| Example 5 | Zeolite | TPP | CMC | 0.5 | 5 | 76 | 173 | 255 |
| Example 6 | Zeolite | TPP | CMC | 10 | 5 | 79 | 169 | 280 |
| Example 7 | Zeolite | TPP | CMC | 1 | 1 | 79 | 170 | 280 |
| Example 8 | Zeolite | TPP | CMC | 1 | 20 | 76 | 170 | 242 |
| Comparative Example 1 | - | - | - | - | - | 80 | 162 | 365 |
| Comparative Example 2 | Zeolite | - | CMC | 1 | 5 | 81 | 168 | 350 |
| Comparative Example 3 | Zeolite | TPP | CMC | 1 | 5 | 61 | 168 | 255 |
| Comparative Example 4 | Zeolite | TPP | - | - | 5 | 63 | 168 | 256 |
| 1) Shell coating amount: wt% of the shell covering the core based on the total weight of the core-shell particles of Preparation Examples 1 to 3, 5 to 7 | | | | | | | | |
| 2) Particle addition amount: wt% of the core-shell particles based on the total weight of the electrolyte of Examples 1 to 8 and Comparative Examples 2 to 4 | | | | | | | | |
| 3) TPP: Triphenyl phosphate | | | | | | | | |
| 4) CMC: Carboxymethylcellulose | | | | | | | | |

According to Table 1 above, in Examples 1 to 8 in which core-shell particles including a core including a porous substrate and a flame retardant and a shell including a thermoplastic polymer and covering the core were added to the electrolyte, it can be seen that the capacity retention rate and thermal stability of the secondary battery are superior to those of Comparative Examples 1 to 4. More specifically, according to Table 1 and FIG. 1, in the case of Comparative Example 1 not including the core-shell particles according to the present disclosure, it can be seen that the on-set temperature at which heat generation of the secondary battery occurs is lower than that of Example 1, and that the maximum temperature of the chamber when the secondary battery explodes is much higher than that of Example 1. In other words, in Example 1, it can be confirmed that the thermal stability is excellent compared to Comparative Example 1 by including core-shell particles capable of decomposing the shell when the secondary battery is exposed to a high temperature environment, so that the porous substrate included in the core adsorbs the electrolyte, suppressing side reactions between the electrode and the electrolyte and releasing the flame retardant included in the core into the electrolyte.

In addition, in the case of Comparative Example 2 in which core-shell particles not including a flame retardant were added to the electrolyte, it can be seen that the thermal stability is significantly reduced compared to Examples 1 to 8 due to the absence of the flame retardant. In the case of Comparative Example 3 in which the flame retardant was directly added to the electrolyte, even without exposure to a high temperature environment, it can be confirmed that the capacity retention rate is significantly reduced compared to Examples 1 to 8 due to the increase in resistance of the secondary battery due to a side reaction between the flame retardant and the electrolyte. In the case of Comparative Example 4 in which the porous substrate not covered by the shell was put into the electrolyte, even without being exposed to a high temperature environment, it can be confirmed that the capacity retention rate is significantly lowered compared to Examples 1 to 8 due to the electrolyte being adsorbed by the pores present on the porous substrate and the electrolyte capacity being reduced.

Meanwhile, in the case of Examples 1 to 4 in which the shell content satisfies 1 wt% to 7 wt% based on the total weight of the core-shell particles, and the core-shell particle content satisfies 2 wt% to 18 wt% based on the total weight of the electrolyte, it can be seen that the capacity retention rate and thermal stability of the secondary battery are superior to those of Examples 5 to 8. It can be confirmed that when the content of the shell in the core-shell particles and the content of the core-shell particles in the electrolyte are adjusted within an appropriate range, the capacity retention rate and thermal stability of the secondary battery are better.

While the present disclosure has been shown and described with reference to certain exemplary embodiments thereof, it will be understood by those skilled in the art that various changes in form and details may be made therein without departing from the spirit and scope of the present disclosure as defined by the appended claims and their equivalents. Therefore, the scope of the present disclosure should not be limited to the above-described exemplary embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the exemplary embodiments of the present disclosure have been described in the drawings and specification. Although specific terminologies are used here, those are only to explain the embodiments of the present disclosure. Therefore, the present disclosure is not restricted to the above-described embodiments and many variations are possible within the spirit and scope of the present disclosure. It should be apparent to those skilled in the art that various modifications can be made on the basis of the technological scope of the present disclosure in addition to the embodiments disclosed herein.

## Claims

1. A core-shell particle comprising:
a core comprising a porous substrate and a flame retardant; and
a shell comprising a thermoplastic polymer and covering the core.

2. The core-shell particle of claim 1, wherein the porous substrate comprises one or more selected from a group consisting of zeolite, alumino phosphate, alumino silicate, titano silicate, calcium phosphate, zirconium phosphate and silica gel.

3. The core-shell particle of claim 1, wherein the porous substrate comprises zeolite.

4. The core-shell particle of anyone of claims 1 to 3, wherein the flame retardant comprises one or more selected from a group consisting of phosphorus-based flame retardants, nitrogen-based flame retardants, phosphorus-nitrogen-based flame retardants, halogen-based flame retardants, and antimony-based flame retardants.

5. The core-shell particle of anyone of claims 1 to 4, wherein the flame retardant comprises an aromatic phosphate compound.

6. The core-shell particle of anyone of claims 1 to 5, wherein the thermoplastic polymer comprises one or more selected from a group consisting of polyolefin-based resins, polyalcohol-based resins, polyimide-based resins, polyester-based resins, and cellulose-based resins.

7. The core-shell particle of anyone of claims 1 to 6, wherein the thermoplastic polymer comprises carboxymethylcellulose.

8. The core-shell particle of anyone of claims 1 to 7, wherein the core-shell particle comprises 93 wt% to 99 wt% of the core and 1 wt% to 7 wt% of the shell based on a total weight of the core-shell particle.

9. A secondary battery comprising:
the core-shell particles of anyone of claims 1 to 8;
an electrode assembly;
an electrolyte; and
a case configured to accommodate the core-shell particles, the electrode assembly, and the electrolyte.

10. The secondary battery of claim 9, wherein the secondary battery comprises 2 wt% to 18 wt% of the core-shell particles based on a total weight of the electrolyte.

11. The secondary battery of claim 9 or 10, wherein the electrode assembly comprises a cathode; an anode; and a separator interposed between the cathode and the anode.

12. A module comprising the secondary battery of anyone of claims 9 to 11 as a unit cell.

13. A device comprising the module of claim 12 as a power source.
